(19) Europäisches Patentamt
European Patent Office
Office européen des brevets

(11) **EP 1 826 099 B1**

(12) **EUROPÄISCHE PATENTSCHRIFT**

(45) Veröffentlichungstag und Bekanntmachung des Hinweises auf die Patenterteilung:
**20.10.2010 Patentblatt 2010/42**

(51) Int Cl.:
***B62D 15/02*** *(2006.01)*    ***G01M 17/06*** *(2006.01)*

(21) Anmeldenummer: **07000088.0**

(22) Anmeldetag: **04.01.2007**

(54) **Verfahren zur Bestimmung der Lenkübersetzung eines Fahrzeugs**

Method for determining the steering ratio of a vehicle

Procédé destiné à la détermination du rapport de direction d'un véhicule

(84) Benannte Vertragsstaaten:
**DE FR IT NL SE**

(30) Priorität: **22.02.2006 DE 102006008156**

(43) Veröffentlichungstag der Anmeldung:
**29.08.2007 Patentblatt 2007/35**

(73) Patentinhaber: **WABCO GmbH**
**30453 Hannover (DE)**

(72) Erfinder:
• **Bolzmann, Oliver**
**30161 Hannover (DE)**
• **Heuer, Bernd**
**31171 Nordstemmen (DE)**
• **Von-Behren, Ulrich**
**30171 Hannover (DE)**
• **Wolf, Thomas**
**30455 Hannover (DE)**

(74) Vertreter: **Günther, Constantin**
**WABCO GmbH**
**Postfach 91 12 62**
**30432 Hannover (DE)**

(56) Entgegenhaltungen:
**JP-A- 2003 175 841    US-B1- 6 560 518**

EP 1 826 099 B1

**Beschreibung**

Die Erfindung betrifft ein Verfahren zur Bestimmung der Lenkübersetzung eines Fahrzeugs.

US 6 560 518 B1 offenbart ein solches Vefahren gemäß dem Oberbegriff des Anspruchs 1.

Zur Verbesserung der Fahrzeugsicherheit werden in modernen Fahrzeugen vermehrt elektronische Systeme, wie z. B. Antiblockiersysteme (ABS), elektronische Stabilitätsprogramme (ESP: Elektronisches Stabilitäts-Programm, ESC: Electronic Stability Control) oder Programme zur Verhinderung eines Überrollens eines Fahrzeugs (RSC: Roll Stability Control), verbaut. Damit diese elektronischen Systeme möglichst effizient und sicher arbeiten können, werden eine Vielzahl von verschiedenen Fahrzeugparametern und Sensormesswerten erfasst und ausgewertet.

Als ein wichtiger Parameter hat sich hierbei der Lenkwinkel des Fahrzeugs herausgestellt. Abhängig von dem Lenkwinkel erfolgt bei einigen elektronischen Systemen (z. B. bei ESP bzw. ESC oder bei RSC) eine Regelung, beispielsweise ein aktiver Eingriff in die Fahrzeugbremsen. Eine genaue Erfassung des Lenkwinkels ist daher sehr wichtig für eine solche Regelung. Üblicherweise wird heute als Maß für den Lenkwinkel die Drehbewegung des Fahrzeuglenkrades (Lenkradwinkel) mittels eines an der Lenksäule des Fahrzeugs angeordneten Lenkradwinkelsensors erfasst. Ausgehend von dem Drehwinkel des Lenkrades wird auf den Lenkwinkel, d. h. auf den Drehwinkel der gelenkten Fahrzeugräder, des Fahrzeugs geschlossen. Hierbei wird entweder ein konstanter Wert für die Lenkübersetzung, d. h. dem Verhältnis zwischen der Drehbewegung des Lenkrads zu dem Verhältnis der Drehbewegung der gelenkten Fahrzeugräder, für den gesamten Lenkbereich angenommen, oder es werden mehrere Werte für die Lenkübersetzung in Abhängigkeit von unterschiedlichen Lenkradwinkeln verwendet, um nichtlineare Lenkübersetzungen aufgrund der vorliegenden Lenkgeometrie möglichst realitätsnah darzustellen, wobei diese mehreren Werte aufwändig ermittelt und in z. B. ein elektronisches Stabilitätsprogramm (ESP, ESC) manuell eingegeben werden mussten.

Aufgabe der Erfindung ist es, auf einfache und kostengünstige Art und Weise die Lenkübersetzung des Fahrzeugs zu bestimmen.

Diese Aufgabe wird durch das in Patentanspruch 1 beschriebene Verfahren gelöst.

Ein Vorteil der Erfindung ist darin zu sehen, dass auch nicht konstante Verläufe der Lenkübersetzung für den gesamten Lenkradwinkelbereich ermittelt und kompensiert werden können. Veränderungen am Lenkverhalten des Fahrzeugs, z. B. durch Veränderung der Beladung oder den Austausch des Lenkgetriebes, werden erfasst. Ein weiterer Vorteil des erfindungsgemäßen Verfahrens besteht darin, dass keine aufwändige Ermittlung und manuelle Eingabe von Werten zur Bestimmung der Lenkübersetzung am Ende der Fahrzeugproduktion, dem sogenannten EOL (EOL: End Of Line), erfolgen muss. Hierdurch wird einerseits eine komfortablere und einfachere Bedienung bzw. Handhabung erreicht, und andererseits wird der Aufwand, z. B. für das fahrzeugspezifische Festlegen der Lenkgeometrieauslegung oder allgemein für die Parameterverwaltung stark reduziert. Erste Werte zur Bestimmung der Lenkübersetzung können vorteilhafterweise bereits am Ende der Fahrzeugproduktion unter definierten Fahrbedingungen, z. B. ebene Fahrbahn, homogener Fahrbahnbelag, hoher Reibwert, etc., im Rahmen der üblichen Fahrzeugtests automatisch eingelernt werden. Ein weiterer Vorteil besteht darin, dass bereits am Ende der Fahrzeugproduktion ein erster schneller Abgleich, ohne Berücksichtigung von thermischen und/oder zeitlichen Offsetverschiebungen, eines Lenkradwinkelsensors und/oder eines Querbeschleunigungssensors erfolgen kann. Dies kann beispielsweise durch eine Diagnoseanforderung während der Spureinstellung des Fahrzeugs erfolgen. Weiterhin ist es vorteilhaft, dass durch die Kompensation der Nullpunktverschiebung eines Sensors erreicht wird, dass ein nachfolgendes System, welches die Sensorwerte verwendet, eine bessere, d. h. genauere Regelung durchführen kann.

In einer vorteilhaften Ausführungsform der Erfindung werden als erfasste Messwerte eine Gierrate und ein Lenkradwinkel des Fahrzeugs sowie die Fahrzeuggeschwindigkeit verwendet.

In einer weiteren vorteilhaften Ausführungsform wird die Gierrate mittels eines Gierratensensors und der Lenkradwinkel mittels eines Lenkradwinkelsensors gemessen.

In einer vorteilhaften Ausführung der Erfindung werden für verschiedene Lenkradwinkel, sogenannte Stützstellen, die zugehörigen Lenkübersetzungen bestimmt, um möglichst genau die reale Lenkübersetzung nachbilden zu können.

In einer weiteren vorteilhaften Ausführungsform wird der Verlauf der Lenkübersetzung mit Hilfe einer Näherung durch die Einteilung des Lenkradwinkels in einzelne Bereiche nachgebildet. Hierzu wird bei den verschiedenen Lenkradwinkeln und den aktuellen Gierraten eine Lenkübersetzung bestimmt. Die Lenkübersetzungen ergeben eine Tabelle oder eine Datenmatrix, welche in einem Datenspeicher eines elektronischen Systems abgelegt werden kann. Aus dieser Tabelle oder der Datenmatrix kann dann ein System, welches z. B. in Abhängigkeit der Lenkübersetzung eine Regelung durchführt, auf einfachste Weise einen Wert für die Lenkübersetzung, abhängig vom vorliegenden Lenkradwinkel, entnehmen. Hierdurch wird eine genauere Regelung erzielt.

In einer vorteilhaften Ausführungsform werden bei dem erfindungsgemäßen Verfahren Werte der Gierrate und/oder des Lenkradwinkels und/oder der Querbeschleunigung verwendet, welche im Hinblick auf eine Nullpunktverschiebung kompensiert worden sind, wobei zur Kompensation gebildete Mittelwerte der Werte der Gierrate und/oder des Lenkradwinkels und/oder der Querbeschleunigung verwendet werden. Hierdurch wird eine ungenaue Einbauposition des Sensors sowie eine zeitliche oder thermische Änderung des Sensorwertes, welche zu einer Verschiebung des Nullpunkts des Sensors führen kann, kompensiert.

In einer weiteren vorteilhaften Ausführungsform werden die Mittelwerte unter Berücksichtigung einer Fahrstrecke und/oder einer Zeitabhängigkeit gebildet. Durch die hohe Anzahl von Messwerten, welche im Laufe des Betriebs des Fahrzeugs gesammelt werden, wird eine hohe Genauigkeit der aus den Messwerten gebildeten Mittelwerte erreicht.

Weitere vorteilhafte Ausführungsformen ergeben sich aus den Unteransprüchen. Ein Ausführungsbeispiel der Erfindung wird im Folgenden anhand von Zeichnungen beschrieben. Hierbei zeigt

Fig. 1    ein Ablaufschema des erfindungsgemäßen Verfahrens, und

Fig. 2    die Lenkübersetzung aufgetragen über dem Lenkradwinkel.

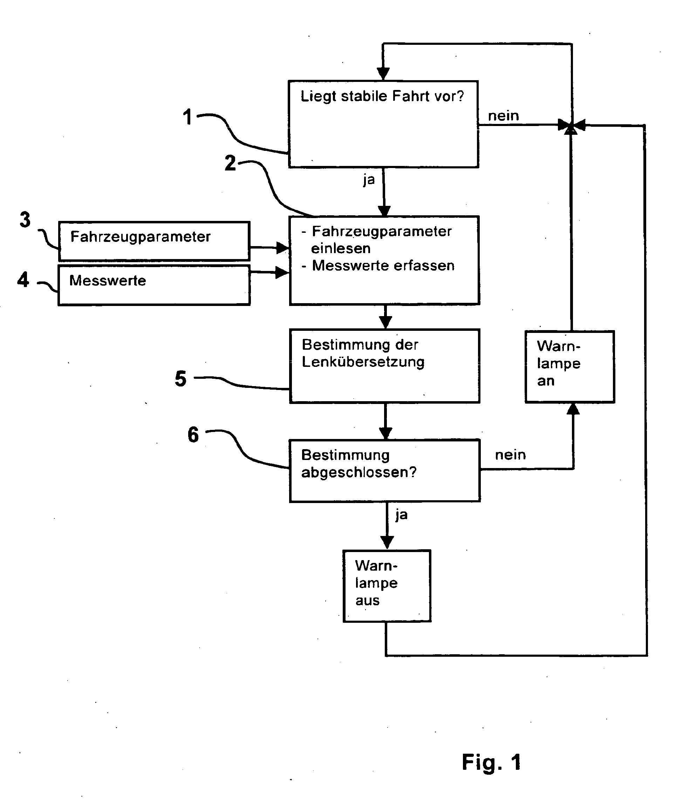

Fig. 1 zeigt ein Ablaufschema des erfindungsgemäßen Verfahrens. In einem ersten Schritt (1) wird überprüft, ob eine stabile Fahrt des Fahrzeugs vorliegt. Eine stabile Fahrt liegt allgemein dann vor, wenn das Fahrzeug weder unter- noch übersteuert, d. h. das Fahrzeug-Istverhalten mit dem Fahrzeug-Sollverhalten übereinstimmt. Dies ist im Allgemeinen dann der Fall, wenn die Querbeschleunigung des Fahrzeugs klein ist. Sobald eine stabile Fahrt vorliegt, werden in einem zweiten Schritt (2) Fahrzeugparameter (3) eingelesen und Messwerte (4) erfasst. Bei den Fahrzeugparametern (3) handelt es sich z. B. um den Radstand und den Eigenlenkgradienten des Fahrzeugs, sowie um die Fahrzeugabmessungen. Diese Fahrzeugparameter (3), beispielsweise der Radstand, können von einem Fahrzeugdatenbus (z. B. CAN) oder von anderen Fahrzeugsystemen oder aus einem Datenspeicher im Fahrzeug abgefragt werden. Bei den Messwerten (4) handelt es sich hauptsächlich um die Gierrate, den Lenkradwinkel und die Fahrzeuggeschwindigkeit. Die Gierrate kann hierbei entweder mittels eines Gierratensensors gemessen, oder z. B. aus den Raddrehzahlen der Fahrzeugräder ermittelt werden. Der Lenkradwinkel wird üblicherweise mittels eines Lenkradwinkelsensors erfasst.

Aus den eingelesenen Fahrzeugparametern (3) und den erfassten Messwerten (4) wird in einem dritten Schritt (5) die Lenkübersetzung bestimmt. Die detaillierte Bestimmung der Lenkübersetzung wird weiter unten beschrieben. Anschließend wird in einem vierten Schritt (6) geprüft, ob die Bestimmung abgeschlossen ist. Solange die Bestimmung der Lenkübersetzung noch nicht abgeschlossen ist, werden der erste Schritt (1), der zweite Schritt (2) und der dritte Schritt (5) wiederholt durchgeführt. Dass die Bestimmung der Lenkübersetzung, z. B. in Form einer Kennlinie, noch nicht abgeschlossen ist, kann dem Fahrzeugführer dadurch angezeigt werden, dass eine Warnlampe im Führerhaus, beispielsweise eine ESC-Lampe angeschaltet bleibt oder angeschaltet wird. Nach Abschluss der Bestimmung der Lenkübersetzung wird diese weiteren elektronischen Systemen, beispielsweise einem ESC- oder RSC-Regler, zur Verfügung gestellt. Dass die Bestimmung der Lenkübersetzung abgeschlossen ist, kann dem Fahrzeugführer durch Ausschalten der Warnlampe angezeigt werden.

Die Lenkübersetzung wird benötigt, um das Lenkverhalten eines Fahrzeugs zu beschreiben und die Führungsgröße, die sogenannte Sollgierrate, einer fahrzeugstabilisierenden Regelung zu berechnen. Das dynamische Verhalten eines Fahrzeugs kann nach den bekannten Methoden der Regelungstechnik durch den zeitlichen Verlauf einer Ausgangsgröße im Verhältnis zu einer Eingangsgröße in Form einer Übertragungsfunktion beschrieben werden. Zur regelungstechnischen Beurteilung des dynamischen Verhaltens eines Fahrzeuges ist somit die Kenntnis dieser Übertragungsfunktion notwendig. Durch Vergleich einer berechneten Gierrate mit einer gemessenen Gierrate wird der Regelbedarf eines solchen Systems bestimmt. Zur möglichst exakten Bestimmung dieser Führungsgröße "Sollgierrate" ist eine genaue Kenntnis des Übertragungsverhaltens des Fahrzeugs erforderlich.

Die Übertragungsfunktion F(s) der Giergeschwindigkeit für instationäre Fahrzeugzustände lautet:

$$F(s) = \frac{\dot{\psi}}{\delta_H / i_s} = \left(\frac{\dot{\psi}}{\delta_H / i_s}\right)_{stat} * \frac{1 + T_z * s}{1 + \frac{2 * D}{\omega} * s + \frac{1}{\omega^2} * s^2} \qquad [1]$$

mit

$\dot{\psi}$ : gemessene Gierrate des Zugfahrzeugs

$\delta_H$ : Lenkradwinkel

$i_s$ : Lenkübersetzung

$T_z$ : Zählerzeitkonstante

$s$ : Laplace-Operator $\left(s = \dfrac{d}{dt}\right)$

$D$ : Dämpfungsmaß

ω : ungedämpfte Eigenfrequenz

Eine einfache Bestimmung der Lenkübersetzung $i_s$ ist im stationären Bereich möglich, da dort die obengenannte Übertragungsfunktion auf den statischen Anteil wie folgt reduziert werden kann:

$$\left(\frac{\dot{\psi}}{\delta_H / i_s}\right)_{stat} = \frac{v}{l + EG * v^2} \qquad [2]$$

damit ergibt sich für die Gierrate $\dot{\psi}$:

$$\dot{\psi} = \frac{\delta_H}{i_s\left(\dfrac{l}{v} + EG * v\right)} \qquad [3]$$

mit

ν : Fahrzeuggeschwindigkeit

$EG$ : Eigenlenkgradient

/ : Radstand

Unter dem Begriff "Eigenlenkgradient $EG$" wird hierbei eine fahrzeugspezifische Größe verstanden, deren Wert gemäß der in DIN 70000 bzw. in der ISO 8855, dort unter dem englischen Begriff "understeer gradient" beschrieben, festgelegten Beziehung bestimmt werden kann. Hierbei bedeutet

$EG$ > 0: untersteuerndes Fahrverhalten

$EG$ = 0: neutrales Fahrverhalten

$EG$ < 0: übersteuerndes Fahrverhalten.

Aus der Funktion gemäß Gleichung [3] wird mit der gemessenen Gierrate $\dot{\psi}$ die aktuelle Lenkübersetzung $i_s$ in Abhängigkeit des Lenkradwinkels $\delta_H$ bestimmt:

$$i_s = \frac{\delta_H}{\dot{\psi}\left(\dfrac{l}{v} + EG * v\right)} \qquad [4]$$

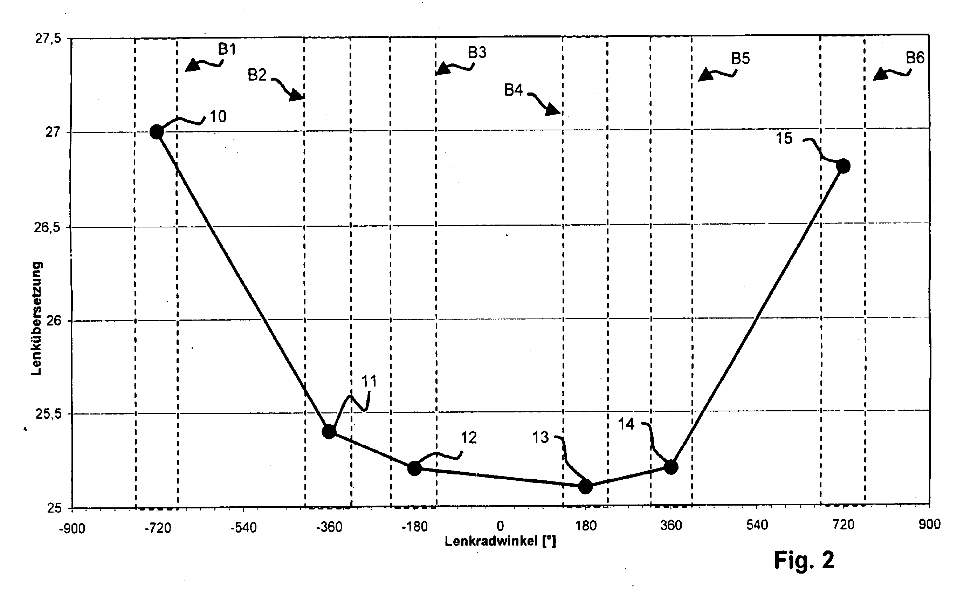

Die Lenkübersetzung $i_s$ eines modernen Fahrzeugs weist in der Regel einen parabelähnlichen Verlauf über den gesamten Lenkradwinkelbereich auf. Ein solcher Verlauf ist in Fig. 2 aufgetragen. Da es nicht möglich ist, diese Funktion abschließend zu bestimmen, wird eine Näherung an eine solche Funktion durchgeführt. Die Näherung erfolgt durch Bestimmung mehrerer, sinnvoll verteilter Stützstellen (10, 11, 12, 13, 14, 15) der bestimmten Lenkübersetzung über den gesamten Lenkradwinkelbereich und durch Interpolation der Zwischenwerte. Für die Interpolation wird im folgenden ein Polygonzug verwendet, welcher jeweils zwei Stützstellen mittels einer Geraden verbindet. Selbstverständlich können auch andere Interpolationen wie Spline etc. verwendet werden.

Der Lenkradwinkelbereich wird in Bereiche (B1, B2, B3, B4, B5, B6) eingeteilt, deren Bereichsmitte die jeweilige Stützstelle (10, 11, 12, 13, 14, 15) darstellt. Für eine erste Bestimmung der Lenkübersetzung $i_s$ können bereits zum Abschluss der Fahrzeugproduktion (EOL: End of Line) erste Stützstellen, beispielsweise für einen Lenkradwinkel von etwa ±360° eingelernt werden. Aus diesen ersten Stützstellen wird eine vorläufige Lenkübersetzung bestimmt. Diese ersten Stützstellen werden z. B. am Ende der Fahrzeugproduktion unter definierten Randbedingungen, z. B. ebene Fahrbahn, homogener Fahrbahnbelag, hoher Reibwert, etc., eingelernt. Das weitere Einlernen von Stützstellen erfolgt dann kontinuierlich während des weiteren Betriebs des Fahrzeugs.

Je nach Lenkradwinkelbereich werden mindestens drei Bereiche je Lenkrichtung festgelegt, wobei "+" z. B. eine Drehung des Lenkrads nach links bedeutet, während "-" eine Drehung nach rechts bedeutet). Als mögliche Bereiche wären z. B. +130˚ bis +230˚, +310˚ bis +410˚ und +670˚ bis +770˚, sowie -130˚ bis -230˚, -310˚ bis - 410˚ und -670˚ bis -770˚ geeignet. Die ersten Stützstellen werden dann sinnvollerweise in die Bereichsmitte, d. h. bei ±180˚, ±360˚ und ±720˚, gelegt. Eine höhere Anzahl der Bereiche und somit der Stützstellen erhöht die Genauigkeit der Ergebnisse. Die zwischen den Stützstellen liegenden Werte werden interpoliert. Zur Erhöhung der Genauigkeit werden mehrere Werte zu jeweils einer Stützstelle ermittelt. Es können auch weitere Werte zwischen den Stützstellen eingelernt werden um eine bessere Annäherung an den tatsächlichen Verlauf (parabelähnlich) der Lenkübersetzung $i_s$ zu erreichen. Die Anzahl der Stützstellen und/oder der Bereiche kann in Abhängigkeit des maximal gemessenen Lenkradwinkels erfolgen. Z. B. können bei einem Fahrzeug mit einem maximal gemessenen Lenkradwinkel von größer ±720˚ mehr Stützstellen und/ oder Bereiche verwendet werden als bei einem Fahrzeug mit einem maximal gemessenen Lenkradwinkel von etwa ±720˚. Ferner kann die Verteilung und/oder die Anzahl der Stützstellen und/oder der Bereiche auch automatisch erfolgen.

Im jeweiligen Bereich um die Stützstellen wird der Wert für die Lenkübersetzung $i_s$ nach der obengenannten Gleichung [4] bestimmt. Es ergibt sich somit eine Datenmatrix, welche die Lenkübersetzung $i_s$ in Abhängigkeit von der gemessenen Gierrate $\dot{\psi}$ und dem Lenkradwinkel $\delta_H$ beschreibt. Die Bestimmung der Lenkübersetzung $i_s$ erfolgt, wie bereits oben erwähnt, nur bei Vorliegen von stabilen und überwiegend stationären Fahrzuständen. Unter Kenntnis der Lenkübersetzung wird das Übertragungsverhalten des Fahrzeugs und die Sollgierrate bestimmt.

Die Sollgierrate wird mit einer gemessenen oder einer aus z. B. den Radgeschwindigkeiten berechneten Gierrate verglichen, um ein instabiles Fahrverhalten des Fahrzeugs zu erkennen und über Motorregelung und/oder Bremseneingriff zu korrigieren. Ab einer gewissen Abweichung (Regelschwelle) erfolgt eine Regelung.

Die Höhe der Regelschwelle ist abhängig von

a) der Vertrauenswürdigkeit der eingelernten Werte (viele eingelernte Werte sind hierbei sehr vertrauenswürdig),
b) den Toleranzen der Messwerte (Gierrate, Lenkradwinkel), und
c) generell von anderen Parametern.

In einer weiteren Ausgestaltung der Erfindung ist für Übertragungsbereiche mit instationären Fahrzuständen eine zusätzliche Beschreibung des dynamischen Verhaltens notwendig, da Verzögerungen bei Kraftänderungen am Reifen und durch Trägheitseinflüsse durch Fahrzeugmassen auftreten. Dieses zusätzliche dynamische Verhalten des Fahrzeugs entspricht einer Filterfunktion zweiter Ordnung in der Form:

$$F(s) = \frac{1 + T_z * s}{1 + \dfrac{2 * D}{\omega} * s + \dfrac{1}{\omega^2} * s^2} \qquad\qquad [5]$$

Durch Vorgabe einer Gierdämpfung $D$ und geeigneter Eigenfrequenz $\omega$ kann das instationäre Fahrzeugverhalten annähernd beschrieben werden. Durch die Berechnung einer damit korrigierten Lenkübersetzung und über geeignete Mittelwertverfahren können auch bei teilweise instationären Fahrzuständen Lenkübersetzungen ermittelt werden. Dadurch können die Randbedingungen zum Lernen der Werte für die einzelnen Stützstellen erweitert werden. Der Lernvorgang wird somit beschleunigt.

Wie bereits eingangs erwähnt, können auch Fehler hinsichtlich einer falschen oder ungenauen Einbauposition des Lenkradwinkelsensors sowie zeitliche oder thermische Änderungen zu einer Verschiebung des Nullpunkts (Offset) des Lenkradwinkelsensors führen. Eine Nullpunktverschiebung kann ebenfalls auch bei anderen Sensoren, wie z. B. einem Gierraten- oder einem Querbeschleunigungssensor auftreten. Um die Qualität der im erfindungsgemäßen Verfahren zur Bestimmung der Lenkübersetzung verwendeten Sensorsignale weiter zu verbessern, werden kompensierte Sensorsignale verwendet.

Hierzu muss eine Nullpunktverschiebung möglichst schnell erkannt und kompensiert werden, damit nachgeschaltete Systeme, wie zum Beispiel Fahrdynamikregelungssysteme, oder nachgeschaltete Lernalgorithmen, welche auf kompensierte Werte angewiesen sind, möglichst schnell mit korrekten Sensorsignalen arbeiten können. Zur Kompensation von Nullverschiebungen werden daher erfindungsgemäß gebildete Mittelwerte verwendet. Die Kompensation erfolgt unter Berücksichtigung der gemessenen Gierrate, aber es ist natürlich auch möglich, die Kompensation in Abhängigkeit einer z. B. aus den Raddrehzahlen gebildeten Gierrate durchzuführen.

Als eine sogenannte Basisgröße wird im Folgenden wegen der relativ geringen Fehlerbehaftung und wegen der sofortigen Verfügbarkeit eines zuverlässigen Offsetwerts nach einem Stillstand des Fahrzeugs eine mittels eines Gierratensensors gemessene Gierrate verwendet. Für dieses Signal werden im Stillstand kontinuierlich 0,5-Sekunden-Zeitmittelwerte gebildet, die abhängig von der Sicherheit des Stillstandes (Druck in Bremsen, eingelegte Feststellbremse) in verschiedenem Maße in einen Gesamtoffset eingehen. Normalerweise liegt nach einer Sekunde Stillstand ein zuverlässiger Offset vor. Dauert der Stillstand länger, werden Unterschiede zwischen den 0,5-Sekunden-Fenstern hinsichtlich plausibler Änderungen bewertet, die auf eine Bewegung des Fahrzeugs im Stillstand hindeuten (kleine Fähre o. ä.).

Während der Fahrt des Fahrzeugs werden bei einer vorliegenden Geradeausfahrt kontinuierlich Zeitmittelwerte in 8-Minutenfenstern ermittelt, um langsame Offsetdrifts kompensieren zu können. Unter einer Geradeausfahrt sollen hierbei alle Fahrzustände verstanden werden, bei denen der Wert der Fahrzeuggierrate ≤ 2°/s ist. Diese Zeitmittelwerte werden direkt von dem gemessenen Wert der Gierrate abgezogen. Sollte nach einem Neustart (Reset) des Systems bzw. des Fahrzeugs kein Stillstand des Fahrzeugs vorliegen, so wird direkt ein Fahrtmittelwert gebildet und nach zwei 8-Minutenfenstern als Offset übernommen.

In Abhängigkeit der Basisgröße (Gierrate) erfolgt ein Abgleich der nachgeschalteten Sensorgrößen (Querbeschleunigung und/oder Lenkradwinkel).

Hierzu erfolgt eine erste Bildung von Mittelwerten der Abweichungen der Querbeschleunigung und des Lenkradwinkels von der gemessenen Gierrate für 25-m-Geradeausfahrt-Streckenabschnitte (MW1). Als Geradeausfahrt wird wieder ein Fahrzustand betrachtet, bei dem der Wert der Gierrate ≤ 2°/s ist. Da der Abgleich auf die gemessene Gierrate bezogen ist, führen leichte Kurvenfahrten zu keinem falschen Offset. Bei dem erstmaligen Einlernen der Nullpunktverschiebung der Querbeschleunigung oder des Lenkradwinkels erfolgt zunächst die Mittelung der Werte der Querbeschleunigung bzw. des Lenkradwinkels über eine 250-m-Fahrstrecke, um nach angemessener Zeit einen hinreichend verlässlichen Offset zu erhalten. Mit der Kenntnis dieses ersten bestimmten Offset kann bereits das Verfahren zur Bestimmung der Lenkübersetzung oder andere Verfahren, welche möglichst genaue Sensorsignale benötigen, entscheidend verbessert werden. Insbesondere kann also auch eine ESC/RSC-Funktionalität freigeschaltet werden, damit ggf. eine Fahrdynamikregelung erfolgen kann.

Nach der ersten Bestimmung des Offsets erfolgt eine zweite Mittelwertbildung der ersten Mittelwerte (MW1) für 25-km-Geradeausfahrt-Streckenabschnitte (MW2). Hierbei wird eine kontinuierliche Filterung der MW1-Werte in den aktuellen Offset durchgeführt, um Sprünge in den korrigierten Signalen zu vermeiden. Es erfolgt eine Speicherung der gelernten Offsets samt aller Zwischenwerte in einem Datenspeicher (z. B. dem EEPROM einer Fahrdynamikregelung), da sich diese gelernten Offsets normalerweise nicht ändern. Diese gespeicherten Offsets werden nach einem Reset (z. B. Fahrzeugstart) ausgelesen, so dass das Lernen des Offsets an der gleichen Stelle fortgesetzt werden kann um die Nullpunktverschiebung von Sensoren noch genauer zu ermitteln.

In einer Ausgestaltung der Erfindung erfolgt die Möglichkeit der Rücksetzung der gelernten Offsets und der Lenkübersetzung und Triggerung eines schnellen Neulernens, z. B. über eine CAN-Botschaft oder Diagnose, wenn eine plötzliche Änderung des Offsets wahrscheinlich ist, z. B. wenn eine andere Beladung bzw. Beladungsverteilung des Fahrzeugs vorliegt, oder wenn neue Komponenten (z. B. Sensoren) im Fahrzeug verbaut wurden, oder wenn weitere Einflussgrößen wie z. B. Lenkgestänge und/oder Lenkgetriebe geändert wurden.

Des weiteren können Abgleichtendenzen über Zähler erfasst werden, um Unplausibilitäten zu erkennen und um über einen erhöhten Abgleichbedarf auf die Richtigkeit des gelernten Offsets zu schließen. Bei erkannten Unplausibilitäten erfolgt ein automatischer Neustart der Abgleiche.

Darüber hinaus können auch zeitabhängige Mittelwerte gebildet werden, bei denen keine Berücksichtigung der Fahrstrecke für die Querbeschleunigung und den Lenkradwinkel erfolgt.

## Patentansprüche

1. Verfahren zur Bestimmung der Lenkübersetzung eines Fahrzeugs, wobei während einer stabilen Fahrt des Fahrzeugs die Lenkübersetzung aus erfassten Messwerten (4) unter Berücksichtigung von Fahrzeugparametern (3) bestimmt wird, und wobei als erfasste Messwerte (4) eine Gierrate und ein Lenkradwinkel des Fahrzeugs sowie die Fahrzeuggeschwindigkeit verwendet werden, **dadurch gekennzeichnet, dass** der Lenkradwinkel und/oder die Gierrate hinsichtlich einer Nullpunktverschiebung kompensiert wird/werden.

2. Verfahren nach Anspruch 1, **dadurch gekennzeichnet, dass** die Gierrate mittels eines Gierratensensors und der Lenkradwinkel mittels eines Lenkradwinkelsensors gemessen wird.

3. Verfahren nach Anspruch 1, **dadurch gekennzeichnet, dass** als Fahrzeugparameter (3) der Eigenlenkgradient und/oder der Radstand und/oder die Fahrzeugabmessungen verwendet werden.

4. Verfahren nach mindestens einem der Ansprüche 1 oder 2, **dadurch gekennzeichnet, dass** für verschiedene Lenkradwinkel, sogenannte Stützstellen (10, 11, 12, 13, 14, 15), zugehörige Gierraten erfasst werden.

5. Verfahren nach Anspruch 4, **dadurch gekennzeichnet, dass** der gesamte Lenkradwinkelbereich in mehrere Bereiche (B1, B2, B3, B4, B5, B6) unterteilt wird, wobei jeder Bereich mindestens eine Stützstelle (10, 11, 12, 13, 14, 15) aufweist.

**6.** Verfahren nach Anspruch 4 oder 5, **dadurch gekennzeichnet, dass** Werte zwischen den Stützstellen (10, 11, 12, 13, 14, 15) durch Interpolation ermittelt werden.

**7.** Verfahren nach mindestens einem der Ansprüche 4 bis 6, **dadurch gekennzeichnet, dass** bereits am Ende der Fahrzeugproduktion mindestens zwei Stützstellen eingelernt werden.

**8.** Verfahren nach mindestens einem der Ansprüche 4 bis 7, **dadurch gekennzeichnet, dass** zu jeder Stützstelle mehrfach die zugehörige Lenkübersetzung eingelernt wird.

**9.** Verfahren nach mindestens einem der Ansprüche 4 bis 8, **dadurch gekennzeichnet, dass** aus den Stützstellen und den zugehörigen Lenkübersetzungen eine Datenmatrix gebildet wird, welche den Verlauf der Lenkübersetzung beschreibt.

**10.** Verfahren nach Anspruch 3, **dadurch gekennzeichnet, dass** die Fahrzeugparameter (3) von einem Fahrzeugdatenbus und/oder von im oder am Fahrzeug angeordneten elektronischen Systemen und/oder aus Datenspeichern abgefragt werden.

**11.** Verfahren nach mindestens einem der vorherigen Ansprüche, **dadurch gekennzeichnet, dass** dem Fahrzeugführer durch eine Warnlampe angezeigt wird, dass eine ausreichende Bestimmung der Lenkübersetzung noch nicht beendet worden ist.

**12.** Verfahren nach Anspruch 1, **dadurch gekennzeichnet, dass** als weiterer Fahrzeugparameter (3) eine Querbeschleunigung verwendet wird, wobei die Querbeschleunigung hinsichtlich einer Nullpunktverschiebung kompensiert wird.

**13.** Verfahren nach Anspruch 1 oder 12, **dadurch gekennzeichnet, dass** die Kompensation durch Bildung von Mittelwerten erreicht wird.

**14.** Verfahren nach Anspruch 13, **dadurch gekennzeichnet, dass** die Mittelwerte unter Berücksichtigung einer Fahrstrecke und/oder einer Zeitabhängigkeit gebildet werden.

**15.** Verfahren nach mindestens einem der Ansprüche 1 bis 14, **dadurch gekennzeichnet, dass** als eine Basisgröße für die Kompensation wegen der relativ geringen Fehlerbehaftung und wegen der sofortigen Verfügbarkeit eines zuverlässigen Offsetwerts nach einem Stillstand des Fahrzeugs die mittels eines Gierratensensors gemessene Gierrate des Fahrzeugs verwendet wird.

**16.** Verfahren nach Anspruch 15, **dadurch gekennzeichnet, dass** die Basisgröße während des Stillstands oder einer Geradeausfahrt des Fahrzeugs bestimmt wird.

**17.** Verfahren nach mindestens einem der Ansprüche 1 bis 16, **dadurch gekennzeichnet, dass** der Lenkradwinkel und/oder die Querbeschleunigung in Abhängigkeit von der Basisgröße und in Abhängigkeit von einer Fahrstrecke oder einer Zeitspanne kompensiert werden.

**Claims**

**1.** Method for determining the steering ratio of a vehicle, wherein during stable travel of the vehicle the steering ratio is determined from detected measured values (4) taking into account vehicle parameters (3) and wherein a yaw rate and a steering wheel angle of the vehicle as well as the speed of the vehicle are used as detected measured values (4), **characterized in that** the steering wheel angle and/or the yaw rate is/are compensated with respect to a zero point displacement.

**2.** Method according to Claim 1, **characterized in that** the yaw rate is measured by means of a yaw rate sensor and the steering wheel angle is measured by means of a steering wheel angle sensor.

**3.** Method according to Claim 1, **characterized in that** the self-steering gradient and/or the wheel base and/or the vehicle dimensions are used as vehicle parameters (3).

4. Method according to at least one of Claims 1 or 2, **characterized in that** associated yaw rates are detected for various steering wheel angles, referred to as reference points (10, 11, 12, 13, 14, 15).

5. Method according to Claim 4, **characterized in that** the entire steering wheel angle range is divided into a plurality of ranges (B1, B2, B3, B4, B5, B6), each range having at least one reference point (10, 11, 12, 13, 14, 15).

6. Method according to Claim 4 or 5, **characterized in that** values between the reference points (10, 11, 12, 13, 14, 15) are determined by means of interpolation.

7. Method according to at least one of Claims 4 to 6, **characterized in that** at least two reference points are already trained at the end of the production of the vehicle.

8. Method according to at least one of Claims 4 to 7, **characterized in that** the associated steering ratio is trained repeatedly for each reference point.

9. Method according to at least one of Claims 4 to 8, **characterized in that** a data matrix, which describes the profile of the steering ratio, is formed from the reference points and the associated steering ratios.

10. Method according to Claim 3, **characterized in that** the vehicle parameters (3) are interrogated by a vehicle data bus and/or by electronic systems arranged in or on the vehicle and/or from data memories.

11. Method according to at least one of the preceding claims, **characterized in that** it is indicated to the vehicle driver by means of a warning lamp that a sufficient determination of the steering ratio has not yet been ended.

12. Method according to Claim 1, **characterized in that** a lateral acceleration is used as a further vehicle parameter (3) wherein the lateral acceleration is compensated in terms of a zero point displacement.

13. Method according to Claim 1 or 12, **characterized in that** the compensation is achieved by forming mean values.

14. Method according to Claim 13, **characterized in that** the mean values are formed by taking into account a distance and/or a time dependence.

15. Method according to at least one of Claims 1 to 14, **characterized in that** after the vehicle comes to a standstill, the yaw rate of the vehicle which has been measured by means of a yaw rate sensor is used as a basic variable for the compensation owing to the relatively low susceptibility to faults and because of the immediate availability of a reliable offset value.

16. Method according to Claim 15, **characterized in that** the basic variable is determined during the stationary state or during straight-ahead travel of the vehicle.

17. Method according to at least one of Claims 1 to 16, **characterized in that** the steering wheel angle and/or the lateral acceleration are compensated as a function of the basic variable and as a function of a distance or a time period.

**Revendications**

1. Procédé pour déterminer le rapport de direction d'un véhicule, dans lequel, pendant une conduite stable du véhicule, le rapport de direction est déterminé à partir de valeurs de mesure détectées (4) en tenant compte de paramètres du véhicule (3), et dans lequel, on utilise comme valeurs de mesure détectées (4) une vitesse de lacet et un angle de volant de direction du véhicule ainsi que la vitesse du véhicule, **caractérisé en ce que** l'angle de volant de direction et/ou la vitesse de lacet sont compensés en termes de décalage du zéro.

2. Procédé selon la revendication 1, **caractérisé en ce que** la vitesse de lacet est mesurée au moyen d'un capteur de vitesse de lacet et l'angle de volant de direction est mesuré au moyen d'un capteur d'angle de volant de direction.

3. Procédé selon la revendication 1, **caractérisé en ce que** l'on utilise comme paramètres du véhicule (3) le gradient de direction propre et/ou l'écartement des roues et/ou les dimensions du véhicule.

**4.** Procédé selon au moins l'une quelconque des revendications 1 ou 2, **caractérisé en ce que** pour différents angles de volant de direction, on détecte des vitesses de lacet associées à des points dits de support (10, 11, 12, 13, 14, 15).

**5.** Procédé selon la revendication 4, **caractérisé en ce que** la plage d'angle de volant de direction totale est divisée en plusieurs plages (B1, B2, B3, B4, B5, B6), chaque plage présentant au moins un point de support (10, 11, 12, 13, 14, 15).

**6.** Procédé selon la revendication 4 ou 5, **caractérisé en ce que** des valeurs entre les points de support (10, 11, 12, 13, 14, 15) sont déterminées par interpolation.

**7.** Procédé selon au moins l'une quelconque des revendications 4 à 6, **caractérisé en ce que** déjà à la fin de la production du véhicule, au moins deux points de support sont appris.

**8.** Procédé selon au moins l'une quelconque des revendications 4 à 7, **caractérisé en ce qu'**à chaque point de support, le rapport de direction associé est appris à plusieurs reprises.

**9.** Procédé selon au moins l'une quelconque des revendications 4 à 8, **caractérisé en ce qu'**à partir des points de support et des rapports de direction associés, on forme une matrice de données qui décrit l'allure du rapport de direction.

**10.** Procédé selon la revendication 3, **caractérisé en ce que** les paramètres de véhicule (3) sont interrogés par un bus de données du véhicule et/ou par des systèmes électroniques disposés dans ou sur le véhicule, et/ou à partir de mémoires de données.

**11.** Procédé selon au moins l'une quelconque des revendications précédentes, **caractérisé en ce que** l'on indique au conducteur du véhicule, par un voyant avertisseur, qu'une détermination suffisante du rapport de direction n'a pas encore été obtenue.

**12.** Procédé selon la revendication 1, **caractérisé en ce que** l'on utilise comme paramètre de véhicule supplémentaire (3), une accélération transversale, l'accélération transversale étant compensée en termes de décalage du zéro.

**13.** Procédé selon la revendication 1 ou 12, **caractérisé en ce que** la compensation est obtenue par formation de valeurs moyennes.

**14.** Procédé selon la revendication 13, **caractérisé en ce que** les valeurs moyennes sont formées en tenant compte d'une distance parcourue et/ou en fonction du temps.

**15.** Procédé selon au moins l'une quelconque des revendications 1 à 14, **caractérisé en ce que** l'on utilise la vitesse de lacet du véhicule mesurée au moyen d'un capteur de vitesse de lacet en tant que valeur de base pour la compensation du fait du relativement faible taux d'erreur et de la disponibilité immédiate d'une valeur de décalage fiable après un arrêt du véhicule.

**16.** Procédé selon la revendication 15, **caractérisé en ce que** la valeur de base est déterminée pendant l'arrêt ou une conduite en ligne droite du véhicule.

**17.** Procédé selon au moins l'une quelconque des revendications 1 à 16, **caractérisé en ce que** l'angle de volant de direction et/ou l'accélération transversale sont compensés en fonction de la valeur de base et en fonction d'une distance parcourue ou d'un intervalle de temps.

**1**  Liegt stabile Fahrt vor? — nein

**2**  ja

**3**  Fahrzeugparameter

**4**  Messwerte

- Fahrzeugparameter einlesen
- Messwerte erfassen

Bestimmung der Lenkübersetzung

**5**

**6**  Bestimmung abgeschlossen? — nein

ja

Warn-lampe an

Warn-lampe aus

**Fig. 1**

Fig. 2

EP 1 826 099 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 6560518 B1